# EUROPÄISCHE PATENTSCHRIFT

(11) **EP 1 173 496 B1**
(45) Veröffentlichungstag und Bekanntmachung des Hinweises auf die Patenterteilung: **18.12.2002**
(21) Anmeldenummer: 00931054.1
(22) Anmeldetag: 04.04.2000
(51) Int. Cl.: C08G 18/80, C08G 18/42, C09D 175/06

(54) **VERFAHREN ZUR HERSTELLUNG VON OXIDATIV TROCKNENDEN URETHANMODIFIZIERTEN POLYESTERDISPERSIONEN UND IHRE VERWENDUNG**
METHOD OF PRODUCING OXIDATIVE DRYING URETHANE-MODIFIED POLYESTER DISPERSIONS AND THEIR USE
PROCEDE DE PREPARATION DE DISPERSIONS DE POLYESTER MODIFIEES A L'URETHANNE A SECHAGE OXYDATIF ET LEUR UTILISATION

(30) Priorität: 16.04.1999 DE 19917161
(43) Veröffentlichungstag der Anmeldung: 23.01.2002
(73) Patentinhaber: Bayer Aktiengesellschaft, 51368 Leverkusen (DE)
(72) Erfinder: MELCHIORS, Martin, D-51373 Leverkusen (DE); BLUM, Harald, D-51375 Leverkusen (DE); NOBLE, Karl-Ludwig, D-51467 Bergisch-Gladbach (DE)
(86) Internationale Anmeldenummer: EP0002981
(87) Internationale Veröffentlichungsnummer: WO00063271

(56) Entgegenhaltungen:
- EP-A- 0 017 199
- EP-A- 0 183 150
- EP-A- 0 510 438
- EP-A- 0 566 953
- DATABASE WPI Week 9534 Derwent Publications Ltd., London, GB; AN 261323 XP002146054 "Water type urethanated alkyd resin dispersion having a film forming component comprises a polyol cpd, organic diisocyanate and hydroxy:alkanoic acid" & JP 07 165855 A (DAINIPPON INK & CHEM), 27. Juni 1995 (1995-06-27)
- DATABASE WPI Week 9521 Derwent Publications Ltd., London, GB; AN 159183 XP002146055 "Resin composition for water resistant coatings" & JP 07 082523 A (DAINIPPON INK AND CHEM), 28. März 1995 (1995-03-28)

## Beschreibung

Die Erfindung betrifft ein Verfahren zur Herstellung von oxidativ trocknenden urethanmodifizierten Polyesterdispersionen und ihre Verwendung in Beschichtungsmitteln.

Die Überführung von Polyhydroxyverbindungen wie z.B. Polyester oder Alkydharze in wasserverdünnbare Bindemittel mit verseifungsstabil eingebauter Carboxylgruppe durch Umsetzung mit Diisocyanaten und einer Verbindung, die mindestens 2 mit Isocyanaten reagierende und mindestens eine zur Anionenbildung befähigte Gruppe enthält, ist bekannt.

So wird z.B. in der US-A-3 412 054 u.a. die Verwendung von 2,2-Bis(hydroxymethyl)propionsäure als Verbindung, die 2 mit Isocyanat reagierende und eine zur Anionenbildung befähigte Gruppe aufweist, zur Herstellung wässriger Polyurethandispersionen, die trocknende Fettsäuren enthalten, beschrieben. Die 2,2-Bis(hydroxymethyl)propionsäure wird dort über ihre Hydroxylgruppen in ein Alkydharz eingeestert und dieses dann mit Diisocyanaten zur Reaktion gebracht. Wie in EP-A-0 017 199 festgestellt wird, führt dieses Verfahren zu uneinheitlichen Produkten mit relativ langsamer Trocknung und nicht überzeugenden lacktechnischen Eigenschaften.

In der EP-A-0 017 199 werden ölmodifizierte carboxylgruppenhaltige Polyurethandispersionen mit verbesserten Eigenschaften beschrieben, die z.B. aus dem Umesterungsprodukt eines natürlichen Öls und einem Polyol, wie z.B. Sojaöl und Pcntaerythrit, und einem isocyanatgruppenhaltigen Prepolymer, wie z.B. dem Umsetzungsprodukt aus Toluyldiisocyanat und 2,2-Bis(hydroxymethyl)propionsäure hergestellt werden. Die Umsetzung findet in verdünnter acetonischer Lösung statt. Das Aceton muß dann destillativ abgetrennt und durch organische Colöser wie z.B. Butylglykol ersetzt werden, um ausreichende Lagerstabilitälen und gute lacktechnische Eigenschaften zu erhalten. Das Abdestillieren und Wiederaufarbeiten des Acetons ist ein unerwünschter technischer Aurwand.

Die Durchführung der Urethanisierungsreaktion in Schmelze (Schmelzdispergierverfahren), wie sie z.B. in DE-A-3 901 190, EP-A-0 427 028 oder EP-A-0 498 156 beschrieben wird, bietet eine Alternative. Man kann so zwar den Destillationsschritt umgehen. Wie in den genannten Dokumenten aber mehrfach beschrieben wird, erhält man eine sehr hochviskose Harzschmelze. Dies führt insbesondere gegen Ende der Urethanisierungsreaktion und bei der Dispergierung zu massiven Durchmischungsproblemen aufgrund mangelnder Rührleistung. Die Folge sind Inhomogenitäten der Harzschmelze, die zu schwankenden Produktqualitäten führt. Ebenso können sich leicht Anbackungen an kälteren Teilen (z.B. Kühlregister) des Reaktors ablagern, verbunden mit Ausbeuteverlust, zusätzlichen Reinigungskosten und Sicherheitsrisiken aufgrund schlechter Wärmeabfuhr während der stark exothermen Urethanisierungsreaktion.

Der vorliegenden Erfindung lag daher die Aufgabe zugrunde, die Nachteile des Stands der Technik zu beseitigen und ein einfaches, wirtschaftliches Verfahren zur Herstellung wässriger, oxidativ trocknender urethanmodifizierter Polyesterdispersionen zu entwickeln, das zur Herstellung qualitativ hochwertiger Decklacke geeignet ist. Einerseits sollte die Verwendung zeit- und kostenintensiver Prozesse, wie z.B. Destillationsschritte, und andererseits zu hohe Schmelzviskositäten des Harzes während bzw. nach abgeschlossener Urethanisierung vermieden werden.

Es wurde gefunden, daß sich bei Verwendung von 3-Hydroxy-2,2-dimethylpropionsäure (Hydroxypivalinsäure) als Hydrophilierungsmittel bei geringen Schmelzviskositäten während und nach Abschluß der Urethanisierungsreaktion wässrige, oxidativ trocknende urethanmodifizierte Polyesterharze herstellen lassen, die bei Raumtemperatur zu Lackfilmen mit gutem lacktechnischem Niveau trocknen.

Da Hydroxypivalinsäure als monohydroxyfunktionelle Carbonsäure bei einer Urethanisierung als Kettenabbrecher wirkt, muß es als überraschend angesehen werden, daß sich mit den so erhaltenen Bindemitteln relativ niedrigen Molekulargewichts gute Lackeigenschaften erzielen lassen.

In DE-A-19 534 361 werden oxidativ trocknende wässrige Bindemittel enthaltend eine Polyurethan-Alkydharzkomponente auf Basis spezieller Fettsäuregemische beschrieben. Die Verwendung von Hydroxypivalinsäure als Hydrophilierungsmittel wird hier zwar erwähnt. DE-A-19 534 361 vermittelt aber keine Lehre, wie durch Verwendung von Hydroxypivalinsäure das oben beschriebene Viskositätsproblem gelöst werden könnte. Vielmehr wird in der Beschreibung und in den Beispielen die Herstellung von Polyurethan-Alkydharzkomponenten beschrieben, die mit 2,2-Dimethylolalkansäuren hydrophiliert sind und unter Einsatz organischer Hilfslösemittel wie z.B.Methylethylketon hergestellt werden. Die Hilfslösemittel werden anschließend destillativ entfernt.

Gegenstand der vorliegenden Erfindung ist also ein Verfahren zur Herstellung oxidativ trocknender urethanmodifizierter wässriger Polyesterharze mit einer Säurezahl von 15 bis 50 mg KOH / g, dadurch gekennzeichnet, daß (alle %-Angaben in Gew.-%)
a) 15 bis 40 % eines in situ hergestellten Prepolymers, bestehend aus
   a1) einer Diisocyanat-Komponente bestehend aus mindestens einem organischen Diisocyanat des Molekulargewichtsbereichs 168 bis 294, und
   a2) Hydroxypivalinsäure,
   wobei das Verhältnis a1:a2 entsprechend einem Äquivalentverhältnis NCO:OH = 1:1 bis 5:1 gewählt wird, mit
b) 60 bis 90 % eines Polyesterharzes mit einer OH-Zahl von 30 bis 100 mg KOH/g und einer Säurezahl ≤5 mg KOH/g, hergestellt durch Umsetzung von
   b1) 20 bis 70 % einer Monocarbonsäurekomponente, die zu mindestens 60 % aus mindestens einer ungesättigten Fettsäure besteht,
   b2) 10 bis 40 % einer Dicarbonsäure, eines Dicarbonsäureanhydrids oder eines Gemischs solcher Verbindungen,
   b3) 0 bis 15 % eines oder mehrerer Diole und
   b4) 5 bis 35 % eines oder mehrerer Polyole mit einer OH-Funktionalität >2, wobei sich b1, b2, b3 und b4 zu 100 % ergänzen, und
c) 0 bis 15 % eines oder mehrerer Polyole mit einer OH-Funktionalität ≥2,
wobei sich a, b und c zu 100 % ergänzen, in 80 bis 95 %iger organischer Lösung zur Reaktion gebracht und anschließend in Wasser dispergiert werden, wobei die in das Reaktionsprodukt eingeführten Carboxylgruppen während der Umsetzung (a + b + c) oder unmittelbar vor, während oder nach der Dispergierung mit 0,5 bis 1,2 Äquivalenten (bezogen auf die vorhandenen Carboxylgruppen) einer Base in Carboxylatgruppen überführt werden.

Gegenstand der Erfindung ist auch die Verwendung der so hergestellten wässrigen Bindemittel in oder als bei Raumtemperatur oxidativ trocknende Lacke oder Beschichtungsstoffe.

Bei der Ausgangskomponente a1 handelt es sich um eine Diisocyanatkomponente, bestehend aus mindestens einem organischen Diisocyanat des Molckulargewichtsbereichs 140 bis 294. Geeignet sind beispielsweise Hexamethylendiisocyanat (HDI), 1-Isocyanato-3,3,5-trimethyl-5-isocyanatomethylcyclohexan (IPDI), Bis-(4-isocyanatocyclohexyl)methan (H₁₂MDI), 1-Isocyanato-1-methyl-4(3)-isocyanatomethylcyclohexan (IMCI), Toluylen-2,4-diisocyanat, Toluylen-2,6-diisocyanat, 2,2,4-Trimethylhexamethylen-1,6-diisocyanat, Naphtylendiisocyanat und andere Isocyanate, wie sie z.B. in Houben-Weyl, Methoden der organischen Chemie, Bd. 14/2, 4.Aufl., G. Thieme Verlag, Stuttgart 1963, S. 61- 70 beschrieben sind.

Die Komponente a1 wird mit Hydroxypivalinsäure (Komponente a2) im Äquivalentverhältnis NCO:OH von 1:1 bis 5:1, bevorzugt 1,8:1 bis 3:1, besonders bevorzugt 2:1 bis 2,5:1 zu einem NCO-funktionellen Prepolymer umgesetzt. Die Umsetzung kann in Substanz oder in einem Teil oder der kompletten Menge des organischen Lösemittels, das während der Urethanisierungsreaktion anwesend ist und anschließend als Colöser in der wässrigen Bindemitteldispersion verbleibt, durchgeführt werden. Möglich ist auch die Verwendung von Hilfslösemitteln an dieser Stelle; diese Hilfslösemittel müssen zu einem späteren Zeitpunkt der Synthese wieder z.B. destillativ entfernt werden.

Die Umsetzung findet bei Temperaturen zwischen 0° und 150°C, bevorzugt zwischen 30° und 100°C statt. Es können auch die üblichen für Urethanisierungen verwendeten Katalystoren wie z.B. tert. Amine, Organozinnverbindungen oder andere metallorganische Verbindungen eingesetzt werden. Zur Verhinderung oder Zurückdrängung von Nebenreaktionen wie z.B. Trimerisierung oder Allophanatisierung können ebenfalls die aus der Isocyanatchemie bekannten Stabilisatoren, z.B. Säurehalogenide wie Isophthaloyldichlorid, eingesetzt werden.

Das NCO-funktionelle Prepolymer a kann in einem beliebigen geeigneten Reaktionsgefäß hergestellt, abgefüllt und später in der gewünschten Menge bei der Herstellung der erfindungsgemäßen Bindemittel den Komponenten b und c zugegeben werden. Komponente a kann aber auch direkt in dem Reaktionsgefäß (in situ) hergestellt werden, in dem dann anschließend die Umsetzung a + b + c zum Polyurethan stattfindet. In diesem Fall bringt man das Prepolymer a nach abgeschlossener Umsetzung a1 + a2 auf die gewünschte Reaktionstemperatur und dosiert dann die Komponenten b und c zu.

Bei der erfindungsgemäßen Komponente b handelt es sich um ein fettsäurehaltiges Polyesterharz mit einer OH-Zahl von 30 bis 100 mg KOH/g und einer Säurezahl ≤5 mg KOH/g. Ihre Herstellung erfolgt durch eine an sich bekannte Umsetzung der Ausgangskomponenten b1 bis b4 gegebenenfalls unter Zuhilfenahme der üblichen Veresterungskatalysatoren vorzugsweise nach dem Prinzip einer Schmelz- oder Azeotropkondensation bei Temperaturen von 80° bis 240°C unter Wasserabspaltung. Im Falle einer azeotropen Veresterung wird das Schleppmittel, üblicherweise Isooctan, Xylol, Toluol oder Cyclohexan, nach beendeter Reaktion abdestilliert.

Bei der Ausgangskomponente b1 handelt es sich um eine Monocarbonsäure-Komponente, die zumindest zu 60 Gew.% aus einer oder mehreren oxidativ trocknenden Fettsäure und zu höchstens 40 Gew.% aus einer oder mehreren weiteren Monocarbonsäuren besteht. Geeignete Fettsäuren sind z.B. Kokosölfettsäure, Sojaölfettsäure, Safflorölfettsäure, Ricinusfettsäure, Ricinensäure, Erdnußölfettsäure, Tallölfettsäure oder Konjuenfettsäure. Geeignete weitere Monocarbonsäuren sind z.B. Benzoesäure, tert.-Butylbenzoesäure, Hexahydrobenzoesäure, 2-Ethylhexansäure, Isononansäure, Decansäure oder Octadecansäure. Bevorzugt wird als Komponente b1 Sojaölfettsäure oder ein Gemisch aus 70 bis 100 % Sojaölfettsäure und 0 bis 30 % Benzoesäure eingesetzt.

Bei der Ausgangskomponente b2 handelt es sich um eine Dicarbonsäure-Komponente, die zumindest aus einer (cyclo)aliphatischen oder aromatischen Dicarbonsäure des Molekulargewichts 116 bis 600 oder deren Anhydrid besteht. Geeignete Dicarbonsäuren oder Anhydride sind z.B. Adipinsäure, Bernsteinsäure, Bernsteinsäureanhydrid, Sebacinsäure, Dimcrfettsäure, Maleinsäure, Maleinsäureanhydrid, Fumarsäure, Isophthalsäure, Terephthalsäure, Phthalsäure, Phthalsäureanhydrid, Tetrahydrophthalsäure, Tetrahydrophthalsäureanhydrid, Hexahydrophthalsäure oder Hexahydrophthalsäureanhydrid. Bevorzugt wird als Komponente b2 Phthalsäureanhydrid eingesetzt.

Bei der Ausgangskomponente b3 handelt es sich um eine Diolkomponente, die zumindest aus einem zweiwertigen Alkohol des Molekulargewichts 62 bis 2000 besteht. Geeignete derartige Diole sind z.B. Ethylenglykol, 1,2- und 1,3-Propylenglykol, Neopentylglykol, 2-Butyl-2-ethylpropandiol, 1,3-, 2,3- und 1,4-Butandiol, 1,5-Pentandiol, 2,2,4-Trimethylpentandiol, 1,6-Hexandiol, Diethylenglykol, Triethylenglykol, Dipropylenglykol, Tripropylenglykol, hydrierte Bisphenole, 1,4-oder andere stellungsisomere Cyclohexandiole, 1,4- oder andere stellungsisomere Cyclohexandimethanole oder die an sich bekannten Polyetherpolyole auf Basis von Ethylenoxid und/oder Propylenoxid und/oder Tetrahydrofuran, die durch Anlagerung der genannten Alkylenoxide an bifunktionelle Starterverbindungen erhalten werden. Bevorzugt wird als Komponente b3 Neopentylglykol eingesetzt.

Bei der Ausgangskomponente b4 handelt es sich um eine höherfunktionelle Polyolkomponente, die zumindest aus einem drei- oder mehrwertigen (bevorzugt drei- oder vierwertigen) Alkohol des Molekulargewichtsbereichs 92 bis 300 besteht. Geeignete höherfunktionelle Alkohole sind z.B. Trimethylolpropan, Glycerin oder Pentaerythrit. Bevorzugt werden als Komponente b4 Trimethylolpropan und/oder Pentaerythrit eingesetzt.

Zur Herstellung der Komponente b werden 20 bis 70 %, bevorzugt 45 bis 60 % der Komponente b1, 10 bis 40 %, bevorzugt 20 bis 30 % der Komponente b2, 0 bis 15 %, bevorzugt 0 bis 10 % der Komponente b3 und 5 bis 35 %, bevorzugt 20 bis 30 % der Komponente b4 eingesetzt.

Bei der Durchführung des erfindungsgemäßen Verfahrens zur Herstellung der urethanmodifizierten Polyetserharzen werden 15 bis 40 %, bevorzugt 20 bis 30 % der Komponente a, 60 bis 90 %, bevorzugt 70 bis 80 % der Komponente b und 0 bis 15%, bevorzugt 0 bis 10% der Komponente c eingesetzt, wobei sich jeweils a + b + c zu 100 % ergänzen. Zur Beschleunigung der Urethanisierungsreaktion und zur Erzielung wasserverdünnbarer Produkte können geeignete Katalysatoren, wie sie zur Beschleunigung der NCO-OH-Reaktion dem Fachmann bekannt sind, eingesetzt werden. Beispiele sind tert. Amine wie z.B. Triethylamin, Organozinnverbindungen wie z.B. Dibutylzinnoxid, Dibutylzinndilaurat oder Zinn-bis(2-ethylhexanoat) oder andere metallorganische Verbindungen. Dabei wird die Urethanisierung in 80 bis 95 %iger organischer Lösung durchgeführt. Geeignete nicht isocyanat-reaktive Lösemittel sind z.B. Dimethyldiglykol, N-Methylpyrrolidon, Ethylglykolacetat, Butylacetat, Methoxypropylacetat, Xylol, Toluol oder Solvent Naphtha. Nach der Urethanisierungsreaktion können zur Erzielung bestimmter Eigenschaften auch geringe Mengen anderer organischer Lösemittel wie z.B. Ethanol, n-Propanol, iso-Propanol, n-Butanol, iso-Butanol, tert.-Butanol, Pentanol, Hexanol, Octanol, Butylglykol, Ethylglykol, Butyldiglykol, Ethyldiglykol, Methyldiglykol oder Methoxypropanol zugesetzt werden.

Aufgrund des Molekulargewichtsaufbaus und der Zunahme der Zahl und Konzentration der Urethangruppen steigt die Viskosität während einer Polyurethanbildung im allgemeinen stark an und führt insbesondere gegen Ende der Urethanisierungsreaktion zu Rühr- und Durchmischungsproblemen. Bei einer erfindungsgemäßen Zusammensetzung steigt die Viskosität dieser Harzschmelze gegen Ende der Urethanisierung aber nur auf Auslaufzeiten von 10 bis 50 Sekunden, gemessen in 40 %iger xylolischer Lösung bei 23°C im DIN4-Becher, an. Die Schmelze bleibt somit bei Reaktionstemperatur dünnflüssig und auch ohne spezielle Rühraggregate leicht rührbar.

Die 80 bis 95 %ige Harzlösung wird dann neutralisiert und in Wasser dispergiert. Die zumindest teilweise Neutralisation der Carboxylgruppen kann in organischer Phase vor Dispergierung in Wasser, nach Dispergierung in Wasser oder während des Dispergierens erfolgen, z.B. indem man die organische Harzlösung in einem Gemisch aus Wasser und Neutralisationsamin dispergiert. Neutralisationsmittel werden in solchen Mengen eingesetzt, daß das Harz mit 0,5 bis 1,2 Äquivalenten (bezogen auf Carboxylgruppen) der Base in Carboxylatgruppen überführt werden. Geeignete Neutralisationsmittel sind z.B. Alkalihydroxide, Ammoniak, Dimethylamin, Diethylamin, Dipropylamin, Dibutylamin, Trimethylamin, Triethylamin, Tripropylamin, Tributylamin, Ethyldiisopropylamin, Ethanolamin, Diethanolamin, Triethanolamin, N,N-Dimethylethanolamin, N-Methylethanolamin, N-Methyldiethanolamin, Isopropanolamin, Diisopropanolamin, Triisopropanolamin, N,N-Dimethylisopropanolamin, Morpholin, N-Methylmorpholin, 2-Amino-2-ethyl-1-propanol und Gemische derartiger Basen. Bevorzugt werden Ammoniak, Triethylamin oder Ethyldiisopropylamin eingesetzt; besonders bevorzugt ist die Verwendung von Triethylamin.

Die erfindungsgemäßen urethanmodifizierten Polyesterdispersionen können ohne weiteres als bei Raumtemperatur oxidativ trocknende Lacke oder Beschichtungsstoffe eingesetzt werden. Vorzugsweise werden ihnen jedoch die aus der Lacktechnologie bekannten üblichen Hilfs- und Zusatzmittel wie z.B. Pigmente, Trocknungsbeschleuniger, Hautverhinderungsmittel, Verdicker, Verlaufsmittel und Entschäumer zugesetzt. Einige dieser Hilfsstoffe können eventuell auch schon während der Herstellung der wässrigen Bindemittel dem Reaktionsansatz zugefügt werden, falls hierdurch das Herstellverfahren nicht gestört wird. Auf diese Weise entstehen hochwertige, bereits bei Raumtemperatur oxidativ trocknende Lacke und Beschichtungsmassen. Sie können durch an sich bekannte Methoden wie beispielsweise Spritzen, Fluten, Tauchen, Walzen, Rakeln, Gießen oder Streichen auf beliebige Substrate wie Holz, Papier, Metall, Kunststoffe oder Glas aufgebracht werden. Bevorzugt ist ihre Verwendung zur industriellen Metallackierung.

Die Lacke trocknen bei Raumtemperatur oder durch forcierte Wärmetrocknung zu klaren, vernetzten, glänzenden Überzügen.

Die nachfolgenden Beispiele sollen die Erfindung erläutern, ohne sie einzuschränken. Alle Prozentangaben sind Gewichtsprozente.

### Beispiel 1 (erfindungsgemäß; Herstellung eines Polyesterharzes)

In ein 151-Reaktionsgefäß mit Rührer, Heizvorrichtung und Wasserabscheider mit Kühlvorrichtung werden 211 g Neopentylglykol, 5710g Sojaölfettsäure, 1474 g Benzoesäure, 2843 g Pentaerythrit und 3239 g Phthalsäureanhydrid eingewogen und unter Stickstoff in einer Stunde auf 140°C aufgeheizt. In weiteren 2 Stunden heizt man auf 160°C auf, gibt bei 160°C soviel Xylol zu, daß sich kein Sublimat festsetzt und sich ein schwacher Rückfluß einstellt, und heizt dann in weiteren 6 Stunden auf 220°C auf. Bei 220°C kondensiert man solange unter Rückführung des Xylols, bis eine Säurezahl von 15 mg KOH/g erreicht ist und dann bei gleicher Temperatur unter Abdestillieren des Xylols, bis eine Säurezahl <5 erreicht ist. Das so erhaltene Polyesterharz hat bei einer Säurezahl von 4 mg KOH/g eine OH-Zahl von 51 mg KOH/g.

### Beispiel 2 (erfindungsgemäß; Herstellung eines Polyesterharzes)

In ein 151-Reaktionsgefäß mit Rührer, Heizvorrichtung und Wasserabscheider mit Kühlvorrichtung werden 3522 g Trimethylolpropan, 6631 g Sojaölfettsäure und 3157 g Phthalsäureanhydrid eingewogen und unter Stickstoff in einer Stunde auf 140°C aufgeheizt. In weiteren 2 Stunden heizt man auf 160°C auf, gibt bei 160°C soviel Xylol zu, daß sich kein Sublimat festsetzt und sich ein schwacher Rückfluß einstellt, und heizt dann in weiteren 6 Stunden auf 220°C auf. Bei 220°C kondensiert man solange unter Rückführung des Xylols, bis eine Säurezahl von 15 mg KOH/g erreicht ist und dann bei gleicher Temperatur unter Abdestillieren des Xylols, bis eine Säurezahl <5 erreicht ist. Das so erhaltene Polyesterharz hat bei einer Säurezahl von 4,5 mg KOH/g eine OH-Zahl von 56 mg KOH/g.

### Beispiel 3 (erfindungsgemäß; Herstellung eines NCO-funktionellen Prepolymers)

In einem 51-Reaktionsgefäß mit Kühl-, Heiz- und Rührvorrichtung legt man bei 50°C 2223 g 1-Isocyanato-3,3,5-trimethyl-5-isocyanatomethylcyclohexan (IPDI) und 4 g Isophthaloyldichlorid vor. Man dosiert nun eine Mischung von 1180 g Hydroxypivalinsäure in 850 g N-Methylpyrrolidon so langsam zu, daß die Temperatur des Reaktionsgemisches nicht über 60°C steigt. Man hält nun solange, bis der gewünschte bzw. berechnete (nach Verbrauch aller OH-Gruppen, nicht aber der Carboxylgruppen der Hydroxypivalinsäure) NCO-Gehalt erreicht ist. Man erhält eine NCO-funktionelles Prepolymer mit einem NCO-Gehalt von 9,9 % und einer Säurezahl von 132 als 80 %ige Lösung in N-Methylpyrrolidon. Das Produkt kann abgekühlt und abgefüllt werden oder sofort zur Herstellung des urethanmodifizierten Polyesterharzes eingesetzt werden.

### Beispiel 4 (erfindungsgemäß; Herstellung eines NCO-funktionellen Prepolymers)

In einem 51-Reaktionsgefäß mit Kühl-, Heiz- und Rührvorrichtung legt man bei 60°C 1940 g 1-Isocyanato-1-methyl-4(3)-isocyanatomethylcyclohexan (IMCI) und 3 g Isophthaloyldichlorid vor. Man dosiert nun eine Mischung von 1180 g Hydroxypivalinsäure in 780 g N-Methylpyrrolidon so langsam zu, daß die Temperatur des Reaktionsgemisches nicht über 70°C steigt. Man hält nun solange, bis der der gewünschte bzw. berechnete (nach Verbrauch aller OH-Gruppen, nicht aber der Carboxylgruppen der Hydroxypivalinsäure) NCO-Gehalt erreicht ist. Man erhält eine NCO-funktionelles Prepolymer mit einem NCO-Gehalt von 10,6 % und einer Säurezahl von 144 als 80%ige Lösung in N-Methylpyrrolidon. Das Produkt kann abgekühlt und abgefüllt werden oder sofort zur Herstellung des urethanmodifizierten Polyesterharzes eingesetzt werden.

### Beispiel 5

### (erfindungsgemäß; Herstellung einer urethanmodifizierten Polyesterdispersion)

In einem 51-Reaktionsgefäß mit Kühl-, Heiz- und Rührvorrichtung werden 1244 g des NCO-funktionellen Prepolymers aus Beispiel 3 unter N₂-Atmosphäre vorgelegt und auf 80°C aufgeheizt. Dann gibt man langsam 3000 g des auf 50 bis 70°C erwärmten Polyesters aus Beispiel 2, 50 g Trimethylolpropan und 297 g Triethylamin langsam zu. Unter Ausnutzung der Exothermie heizt man auf 100°C auf und hält solange bei dieser Temperatur, bis sich keine NCO-Gruppen mehr feststellen lassen.

Die Harzschmelze hat dann eine Viskosität, bestimmt als Auslaufzeit einer 40 %igen xylolischen Lösung im DIN4-Becher bei 23°C, von 16 Sekunden.

Anschließend werden 33 g ethoxyliertes Nonylphenol zugegeben, in ca. 3500 g Wasser dispergiert, mit 50 g Hautverhinderungsmittel Ascinin® conz (Bayer) und 500 g Butylglykol versetzt, homogenisiert und mit Wasser und Triethylamin auf eine Viskosität von 2500 mPas (D = 40 s-1, 23°C) eingestellt. Das erhaltene wässrige urethanmodifizierte Polyesterharz weist eine Säurezahl von 44 mg KOH/g auf.

### Beispiel 6 (Vergleich; Herstellung einer urethanmodifiz. Polyesterdispersion)

In einem 41-Reaktionsgefäß mit Kühl-, Heiz- und Rührvorrichtung werden 1126 g eines Polyesters mit einer OH-Gehalt von 5,3 % und einer Säurezahl von 3 mg KOH/g, bestehend aus 24,9 % Pentaerythrit, 6,8 % Phthalsäureanhydrid, 7,6 % Isophthalsäure, 51,3 % Sojaölfettsäure und 9,5 % Benzoesäure, vorgelegt und zusammen mit 87,5 g Dimethylolpropionsäure, 244 g N-Methylpyrrolidon und 33 g Triethylamin auf 80°C aufgeheizt und 30 min homogenisiert. Anschließend gibt man 286,5 g 1-Isocyanato-3,3,5-trimethyl-5-isocyanatomethylcyclohexan (IPDI) unter kräftigen Rühren zu, heizt (unter Ausnutzung der Exothermie der Reaktion) auf 100°C auf und hält das Gemisch solange bei dieser Temperatur, bis sich keine NCO-Gruppen mehr feststellen lassen.

Die Harzschmelze hat dann eine Viskosität, bestimmt als Auslaufzeit einer 40 %igen xylolischen Lösung im DIN4-Becher bei 23°C von 157 Sekunden.

Anschließend werden 14,4 g ethoxyliertes Nonylphenol zugegeben, in ca. 1400 g Wasser dispergiert, mit 21,6 g Hautverhinderungsmittel Ascinin® conz (Bayer) versetzt, homogenisiert und mit Wasser und Triethylamin auf eine Viskosität von 1100 mPas (D = 40 s⁻¹, 23°C) eingestellt. Das erhaltene wässrige urethanmodifizierte Polyesterharz hat eine Säurezahl von 27 mg KOH/g.

### Beispiel 7 (erfindungsgemäß; Herstellung eines oxidativ trocknenden Decklacks):

296 g Bindemittel-Dispersion aus Beispiel 5, 1,5 g Butanonoxim, 2,3 g Octasoligen Co 7 aqua (Cobalt-Sikkativ, 50 %ig in Wasser), 80 g Titandioxid Bayertitan ® R-KB-6 (Bayer) und 57 g dest. Wasser werden zu einer Mahlpaste angerieben. Diese wird anschließend mit 28 g Butylglykol, und 1,1 g Byk® 346 (Byk Chemie) vermischt und mit ca. 69,5 g dest. Wasser auf eine Viskosität von ca. 90 Sekunden bei 23 °C im DIN 4 Auslaufbecher eingestellt. Der Lackfestkörper liegt bei 34 %, der pH-Wert bei 8,9. Nach Applikation auf ein entfettetes Stahlblech wird der Lack bei Raumtemperatur getrocknet. Nach Aushärtung über Nacht erhält man einen störungsfreien Lackfilm mit gutem Eigenschaftsniveau.

## Patentansprüche

1. Verfahren zur Herstellung oxidativ trocknender urethanmodifizierter wässriger Polyesterharze mit einer Säurezahl von 15 bis 50 mg KOH/g, **dadurch gekennzeichnet, daß**
a) 15 bis 40 % eines in situ hergestellten Prepolymers, bestehend aus
a1) einer Diisocyanat-Komponente bestehend aus mindestens einem organischen Diisocyanat des Molekulargewichtsbereichs 168 bis 294, und
a2) Hydroxypivalinsäure,
wobei das Verhältnis a1:a2 entsprechend einem Äquivalentverhältnis NCO : OH = 1:1 bis 5:1 gewählt wird,
mit
b) 60 bis 90 % eines Polyesterharzes mit einer OH-Zahl von 30 bis 100 mg KOH/g und einer Säurezahl ≤5mg KOH/g, hergestellt durch Umsetzung von
b1) 20 bis 70 % einer Monocarbonsäurekomponente, die zu mindestens 60 % aus mindestens einer ungesättigten Fettsäure besteht,
b2) 10 bis 40 % einer Dicarbonsäure, cines Dicarbonsäureanhydrids oder eines Gemischs solcher Verbindungen,
b3) 0 bis 15 % eines oder mehrerer Diole und
b4) 5 bis 35 % eines oder meherer Polyole mit einer OH-Funktionalität >2,
wobei sich b1, b2, b3 und b4 zu 100 % ergänzen, und
c) 0 bis 15 % eines oder mehrerer Polyole mit einer OH-Funktionalität ≥2,
wobei sich a, b und c zu 100 % ergänzen, in 80 bis 95 %iger organischer Lösung zur Reaktion gebracht und anschließend in Wasser dispergiert werden, wobei die in das Reaktionsprodukt eingeführten Carboxylgruppen während der Umsetzung a + b + c oder unmittelbar vor, während oder nach der Dispergierung mit 0,5 bis 1,2 Äquivalenten (bezogen auf die vorhandenen Carboxylgruppen) einer Base in Carboxylatgruppen überführt werden.

2. Verfahren gemäß Anspruch 1, **dadurch gekennzeichnet, daß**
a) 20 bis 30 % eines in situ hergestellten Prepolymers, bestehend aus
a1) einer Diisocyanat-Komponente bestehend aus mindestens einem organischen Diisocyanat des Molekulargweichtsbereichs 168 bis 294, und
a2) Hydroxypivalinsäure,
wobei das Verhältnis a1:a2 entsprechend einem Äquivalentverhältnis NCO:OH = 1,8:1 bis 3:1 gewählt wird,
mit
b) 70 bis 80% eines Polyesterharzes mit einer OH-Zahl von 40 bis 60 mg KOH/g und einer Säurezahl ≤5 mg KOH/g, hergestellt durch Umsetzung von
b1) 45 bis 60 % einer Monocarbonsäurekomponente, die zu mindestens 60 % aus mindestens einer ungesättigten Fettsäure besteht,
b2) 20 bis 30 % einer Dicarbonsäure, eines Dicarbonsäureanhydrids oder eines Gemischs solcher Verbindungen,
b3) 0 bis 10 % eines oder mehrerer Diole und
b4) 20 bis 30 % eines oder mehrerer Polyole mit einer OH-Funktionalität >2,
wobei sich b1, b2, b3 und b4 zu 100 % ergänzen,
und
c) 0 bis 10 % eines oder mehrerer Polyole mit einer OH-Funktionalität ≥2,
wobei sich a, b und c zu 100 % ergänzen, in 80 bis 95 %iger organischer Lösung zur Reaktion gebracht und anschließend in Wasser dispergiert werden, wobei die in das Reaktionsprodukt eingeführten Carboxylgruppen während der Umsetzung a + b + c oder unmittelbar vor, während oder nach der Dispergierung mit 0,5 bis 1,2 Äquivalenten (bezogen auf die vorhandenen Carboxylgruppen) einer Base in Carboxylatgruppen überführt werden.

3. Verfahren gemäß Anspruch 1, **dadurch gekennzeichnet, daß** das Verhältnis a1:a2 entsprechend einem Äquivalentverhältnis NCO : OH = 2:1 bis 2,5:1 gewählt wird.

4. Verfahren gemäß Anspruch 1, **dadurch gekennzeichnet, daß** als Komponente a1 1-Isocyanato-3,3,5-trimethyl-5-isocyanatomethylcyclohexan verwendet wird.

5. Verfahren gemäß Anspruch 1, **dadurch gekennzeichnet, daß** das Polyesterharz b hergestellt wird durch Umsetzung von:
b1) 45 bis 60 % eines Gemischs aus 70 bis 100 % Sojaölfettsäure und 0 bis 30 % Benzoesäure
b2) 20 bis 30 % Phthalsäureanhydrid,
b3) 0 bis 10 % Neopentylglykol und
b4) 20 bis 30 % Trimethylolpropan, Pentaerythrit oder eines Gemischs dieser beiden Polyole,
wobei sich b1, b2, b3 und b4 zu 100 % ergänzen.

6. Verwendung der wässrigen Bindemittel hergestellt gemäß Anspruch 1 in oder als bei Raumtemperatur oxidativ trocknende Lacke oder Beschichtungsstoffe.

## Claims

1. A method of producing urethane-modified, aqueous polyester resins which dry by oxidation and which have an acid number of 15 to 50 mg KOH/g, **characterised in that**
a) 15 to 40 % of a prepolymer which is produced in situ and which consists of
a1) a diisocyanate component consisting of at least one organic diisocyanate of molecular weight range 168 to 294, and
a2) hydroxypivalic acid.
wherein the ratio of a1:a2 is selected corresponding to an equivalent ratio of NCO : OH = 1:1 to 5:1,
is reacted in 80 to 95 % organic solution with
b) 60 to 90 % of a polyester resin with an OH number of 30 to 100 mg KOH/g and an acid number ≤ 5 mg KOH/g, produced by the reaction of
b1) 20 to 70 % of a monocarboxylic acid component, at least 60 % of which consists of at least one unsaturated fatty acid,
b2) 10 to 40 % of a dicarboxylic acid, of a dicarboxylic anhydride or of a mixture of compounds such as these,
b3) 0 to 15 % of one or more diols, and
b4) 5 to 35 % of one or more polyols with an OH-functionality > 2,
wherein b1, b2, b3 and b4 add up to 100%, and
c) 0 to 15 % of one or more polyols with an OH-functionality ≥ 2,
wherein a, b and c add up to 100 %, and are subsequently dispersed in water, and wherein the carboxyl groups which are introduced into the reaction product are converted into carboxylate groups by 0.5 to 1.2 equivalents (with respect to the carboxyl groups present) of a base during the reaction of a + b + c or directly before, during or after dispersion.

2. A method according to claim 1, **characterised in that**
a) 20 to 30 % of a prepolymer which is produced in situ and which consists of
a1) a diisocyanate component consisting of at least one organic diisocyanate of molecular weight range 168 to 294, and
a2) hydroxypivalic acid.
wherein the ratio of a1:a2 is selected corresponding to an equivalent ratio of NCO:OH = 1.8:1 to 3:1,
is reacted in 80 to 95 % organic solution with
b) 70 to 80 % of a polyester resin with an OH number of 40 to 60 mg KOH/g and an acid number ≤ 5 mg KOH/g, produced by the reaction of
b1) 45 to 60 % of a monocarboxylic acid component, at least 60 % of which consists of at least one unsaturated fatty acid,
b2) 20 to 30 % of a dicarboxylic acid, of a dicarboxylic anhydride or of a mixture of compounds such as these,
b3) 0 to 10 % of one or more diols and
b4) 20 to 30 % of one or more polyols with an OH-functionality > 2,
wherein b1, b2, b3 and b4 add up to 100%, and
c) 0 to 10 % of one or more polyols with an OH-functionality ≥ 2,
wherein a, b and c add up to 100 %, and are subsequently dispersed in water, and wherein the carboxyl groups which are introduced into the reaction product are converted into carboxylate groups by 0.5 to 1.2 equivalents (with respect to the carboxyl groups present) of a base during the reaction of a + b + c or directly before, during or after dispersion.

3. A method according to claim 1, **characterised in that** the ratio of a1:a2 is selected corresponding to an equivalent ratio of NCO : OH = 2:1 to 2.5:1.

4. A method according to claim 1, **characterised in that** 1-isocyanato-3,3,5-trimethyl-5-isocyanatomethylcyclohexane is used as component al.

5. A method according to claim 1, **characterised in that** polyester resin b is produced by the reaction of:
b1) 45 to 60 % of a mixture of 70 to 100 % soya oil fatty acid and 0 to 30% benzoic acid,
b2) 20 to 30 % phthalic anhydride,
b3) 0 to 10 % neopentyl glycol, and
b4) 20 to 30 % trimethylolpropane, pentaerythritol or a mixture of these two polyols,
wherein b1, b2, b3 and b4 add up to 100%.

6. The use of the aqueous binder vehicles produced according to claim 1 in or as lacquers or coating materials which dry by oxidation at room temperature.

## Revendications

1. Procédé pour préparer des résines de polyester aqueuses modifiées par uréthane et séchant par oxydation ayant un indice d'acide de 15 à 50 mg de KOH/g, **caractérisé en ce que** l'on fait réagir dans une solution organique à 80 à 95 % puis disperse dans l'eau
a) 15 à 40 % d'un prépolymère préparé in situ, consistant en
a1) un composant diisocyanate consistant en au moins un diisocyanate organique de domaine de masse moléculaire de 168 à 294, et
a2) l'acide hydroxypivalique,
où le rapport a1:a2 est choisi conformément à un rapport d'équivalents NCO:OH = 1:1 à 5:1,
avec
b) 60 à 90 % d'une résine de polyester ayant un indice OH de 30 à 100 mg de KOH/g et un indice d'acide ≤ 5 mg de KOH/g, préparée par réaction de
b1) 20 à 70 % d'un composant acide monocarboxylique qui consiste à raison d'au moins 60 % en au moins un acide gras insaturé,
b2) 10 à 40 % d'un acide dicarboxylique, d'un anhydride d'acide dicarboxylique ou d'un mélange de tels composés,
b3) 0 à 15 % d'un ou plusieurs diols et
b4) 5 à 35 % d'un ou plusieurs polyols ayant une fonctionnalité OH > 2,
où b1, b2, b3 et b4 se complètent à 100 %, et
c) 0 à 15 % d'un ou plusieurs polyols ayant une fonctionnalité OH ≥ 2,
où a, b et c se complètent à 100 %, où on convertit en groupes carboxylate les groupes carboxyle introduits dans le produit réactionnel pendant la réaction de a + b + c ou immédiatement avant, pendant ou après la dispersion avec 0,5 à 1,2 équivalent (par rapport aux groupes carboxyle présents) d'une base.

2. Procédé selon la revendication 1, **caractérisé en ce que** l'on fait réagir dans une solution organique à 80 à 95 % puis disperse dans l'eau
a) 20 à 30 % d'un prépolymère préparé in situ, consistant en
a1) un composant diisocyanate consistant en au moins un diisocyanate organique de domaine de masse moléculaire de 168 à 294, et
a2) l'acide hydroxypivalique,
où le rapport a1:a2 est choisi conformément à un rapport d'équivalents NCO:OH = 1,8:1 à 3:1,
avec
b) 70 à 80 % d'une résine de polyester ayant un indice OH de 40 à 60 mg de KOH/g et un indice d'acide ≤ 5 mg de KOH/g, préparée par réaction de
b1) 45 à 60 % d'un composant acide monocarboxylique qui consiste à raison d'au moins 60 % en au moins un acide gras insaturé,
b2) 20 à 30 % d'un acide dicarboxylique, d'un anhydride d'acide dicarboxylique ou d'un mélange de tels composés,
b3) 0 à 10 % d'un ou plusieurs diols, et
b4) 20 à 30 % d'un ou plusieurs polyols ayant une fonctionnalité OH > 2,
où b1, b2, b3 et b4 se complètent à 100 %,
et
c) 0 à 10 % d'un ou plusieurs polyols ayant une fonctionnalité OH ≥ 2,
où a, b et c se complètent à 100 %, où on convertit en groupes carboxylate les groupes carboxyle introduits dans le produit réactionnel pendant la réaction de a + b + c ou immédiatement avant, pendant ou après la dispersion avec 0,5 à 1,2 équivalent (par rapport aux groupes carboxyle présents) d'une base.

3. Procédé selon la revendication 1, **caractérisé en ce que** le rapport a1:a2 est choisi conformément à un rapport d'équivalents NCO:OH = 2:1 à 2,5:1.

4. Procédé selon la revendication 1, **caractérisé en ce que** l'on utilise le 1-isocyanato-3,3,5-triméthyl-5-isocyanatométhylcyclohexane comme composant al.

5. Procédé selon la revendication 1, **caractérisé en ce que** la résine de polyester b est préparée par réaction de :
b1) 45 à 60 % d'un mélange consistant en 70 à 100 % d'acide gras d'huile de soja et 0 à 30 % d'acide benzoïque,
b2) 20 à 30 % d'anhydride phtalique,
b3) 0 à 10 % de néopentylglycol et
b4) 20 à 30 %. de triméthylolpropane, de pentaérythritol ou d'un mélange de ces deux polyols,
où b1, b2, b3 et b4 se complètent à 100 %.

6. Utilisation des liants aqueux préparés selon la revendication 1 dans ou à titre de peintures ou produits de revêtement séchant par oxydation à la température ambiante.
